# FASCICULE DE BREVET EUROPEEN

(11) **EP 1 598 265 B1**
(45) Date de publication et mention de la délivrance du brevet: **06.05.2015**
(21) Numéro de dépôt: 05291003.1
(22) Date de dépôt: 10.05.2005
(51) Int. Cl.: B63B 21/66, B63G 8/42

(54) **Dispositif de contrôle de la navigation d'un objet sous-marin remorqué**
Vorrichtung zum Steuern eines geschleppten Unterwasserobjektes
Arrangement for steering a towed submerged object

(30) Priorité: 18.05.2004 FR 0405430
(43) Date de publication de la demande: 23.11.2005
(73) Titulaire: Sercel, 44470 Carquefou (FR)
(72) Inventeur: Le Page, Yann, 13013 Marseille (FR); Schom, Frédéric, 13008 Marseille (FR)
(74) Mandataire: Novagraaf Technologies

(56) Documents cités:
- US-A- 3 943 483
- US-A- 6 011 752
- US-A- 6 144 342

## Description

L'invention concerne un dispositif pour contrôler la navigation d'un objet sous-marin remorqué, tel en particulier qu'une antenne acoustique linéaire remorquée.

Notamment pour assurer l'acquisition de données sismiques (en particulier en trois dimensions), il est connu de remorquer un objet sous-marin (tel que l'antenne précitée), en mer.

Typiquement, cette antenne se présente en quelque sorte comme un long câble. Typiquement, plusieurs câbles sont disposés côte à côte, souvent une dizaine, remorqués ensemble.

Or, il importe de positionner correctement ces engins les uns par rapport aux autres (notamment pour éviter qu'ils se croisent). Il est également utile de définir et de contrôler leur profondeur d'immersion.

On a déjà proposé de tels dispositifs de contrôle de la navigation d'objets sous-marins remorqués.

Toutefois, des problèmes demeurent liés, en tout ou partie, à la fiabilité et à l'efficacité de ces dispositifs, à leur coût et à leur facilité d'utilisation et/ou d'entretien.

Pour apporter une solution à tout ou partie des problèmes ci-dessus, il est tout d'abord proposé que le dispositif de l'invention comprenne :
- un corps présentant un axe longitudinal, le corps étant muni de moyens de fixation pour le fixer de manière démontable audit objet sous-marin remorqué, et
- plusieurs ailes stabilisatrices, chacune liée au corps et s'étendant suivant un axe transversal à l'axe longitudinal de ce corps, chaque aile étant orientable par rapport au corps par pivotement autour de son axe transversal, par l'intermédiaire de moyens de contrôle, pour modifier l'angle d'inclinaison desdites ailes.

Un problème souvent rencontré lorsque le dispositif et l'objet sous-marin remorqué sont opérationnels, entraînés derrière un navire tracteur, concerne la rencontre inopinée avec des obstacles. L'objet et/ou le dispositif peuvent alors être gênés dans leur progression, dans leur efficacité, voire être endommagés.

Pour apporter une solution à ces problèmes, il est proposé :
- que le corps comprenne:
   * une partie intérieure fixe pourvue desdits moyens de fixation avec l'objet sous-marin remorqué,
   * et une coque extérieure mobile en rotation vis-à-vis de la pièce intérieure fixe, autour dudit axe longitudinal,
- et que chaque aile soit liée à une extrémité à un arbre s'étendant sensiblement radialement par rapport audit axe longitudinal et qui traverse la coque extérieure mobile pour coopérer avec un ergot engagé dans une gorge circulaire ménagée dans une bague s'étendant autour de ladite partie intérieure fixe, coaxialement, l'ergot glissant dans la gorge lorsque chaque aile et la coque extérieure mobile tournent autour dudit axe longitudinal du corps.

Ainsi, les ailes et la coque extérieure vont pouvoir « s'échapper » par pivotement autour de l'axe longitudinal du corps, en cas de rencontre inopinée avec des obstacles.

Le document US 6 144 342 est considéré comme étant l'état de la technique le plus proche, et divulgue un dispositif de ce sorte, avec deux ailes horizontales pour régler la profondeur.

En relation avec tout ou partie de ce qui précède, on conseille par ailleurs que le dispositif de l'invention comprenne trois ailes disposées autour de l'axe longitudinal, avec deux ailes inférieures définissant entre elles un « V » et une aile supérieure sensiblement verticale, lesdits moyens de contrôle agissant sur ces ailes pour adapter la profondeur d'immersion et la position latérale du dispositif par rapport à un axe de référence le long duquel s'étend globalement l'objet sous-marin remorqué.

Selon un aspect important de l'invention, il a été ici tenu compte du problème lié à la manière d'entraîner efficacement, de façon fiable, les (chaque) aile(s) autour de l'axe transversal correspondant.

En relation avec cet aspect, il est proposé dans l'invention :
- que l'entraînement en rotation de chaque aile autour de son axe transversal soit assuré par l'intermédiaire d'un excentrique lié, à une première extrémité, à l'arbre transversal de cette aile et, à une seconde extrémité, à l'ergot engagé dans la gorge circulaire de la bague correspondante, laquelle est montée coulissante autour de ladite partie intérieure fixe, coaxialement à elle, de sorte que la rotation de l'aile considérée autour de son axe transversal s'opère par déplacement de ladite bague suivant l'axe longitudinal du corps ;
- et/ou que l'entraînement en rotation de chaque aile autour de son axe transversal soit assuré par l'intermédiaire d'une came ayant un axe de rotation décalé par rapport à celui de l'aile correspondante et se déplaçant dans une lumière s'étendant sur un secteur angulaire d'un plan sensiblement radial audit axe longitudinal, la came étant mue par un arbre tournant autour d'un axe transversal à cet axe longitudinal, l'arbre étant entraîné par une roue mue en rotation par un dispositif rotatif à renvoi d'angle entraîné lui-même par un moyen d'entraînement rotatif tournant autour d'un axe sensiblement parallèle à l'axe longitudinal du corps ;
- et, en relation avec la caractéristique qui précède, que l'arbre tournant présente si nécessaire, à son extrémité libre, un excentrique qui se déplace dans ladite lumière, définissant ainsi la came qui assure l'orientation angulaire de chaque aile. la lumière étant ménagée dans ladite bague qui s'étend autour de la partie intérieure fixe du corps, de sorte que la rotation de l'aile considérée autour de son axe transversal s'opère par déplacement de ladite bague suivant l'axe longitudinal du corps.

La deuxième caractéristique ci-dessus permet en particulier de conserver les angles d'attaque des ailes constants, tout en autorisant une rotation du dispositif autour de l'axe dit « longitudinal » du corps.

En particulier avec un système « tripode » comprenant donc trois ailes comme déjà indiqué, on conseille que le dispositif comprenne au moins autant de gorges circulaires que de dites ailes, ces gorges circulaires étant disposées successivement les unes à la suite des autres suivant ledit axe longitudinal, de sorte que les ailes sont décalées les unes par rapport aux autres suivant cet axe longitudinal.

Ceci assure un mécanisme relativement simple et fiable, sans gêne pour l'équilibre et la stabilité.

Un autre problème rencontré concerne la possibilité d'enrouler ensemble sur de gros tourets, le dispositif de l'invention et l'objet sous-marin remorqué (en particulier s'il s'agit d'une sorte de câble comme déjà indiqué), sans avoir à retirer les dispositifs de contrôle de l'invention périodiquement placés le long du câble/objet et sans risquer d'endommager ces dispositifs.

Une solution proposée dans l'invention consiste en ce que :
- la coque extérieure mobile du corps comprend deux demi-coquilles séparables l'une vis à vis de l'autre et vis à vis de la partie intérieure fixe,
- et l'arbre de rotation de chaque aile est lié de façon amovible au corps intérieur,
de sorte que les ailes et la coque extérieure mobile du corps sont séparables vis à vis de la partie intérieure de ce corps, en particulier lorsque celle-ci est raccordée audit objet sous-marin remorqué.

Un autre problème rencontré concerne la manière de commander la rotation des ailes, à partir de l'intérieur du corps.

Pour cela, on conseille :
- que la rotation des (de chaque) aile(s) autour de son axe transversal soit commandée au moins par un moteur électrique fonctionnant par intermittence pour dévier l'(les) aile(s) concernée(s), le (chaque) moteur étant pour cela relié, de préférence pour chaque aile, à au moins un condensateur présentant des temps de charge et de décharge, le moteur étant mis en fonctionnement pendant le temps de décharge du (des) condensateur(s) et étant arrêté pendant son(leur) temps de charge, ou, selon une autre formulation, que la fréquence d'utilisation des moteurs résulte en une puissance moyenne constante et faible,
- et éventuellement que, dans l'un ou l'autre des cas ci-dessus, le condensateur appartienne avantageusement à un circuit électrique comprenant une source de courant, le condensateur étant chargé, pendant son temps de charge, par un courant constant.

Ainsi, on obtiendra une alimentation des motorisations pour la rotation des ailes par charges et décharges de condensateurs.

D'autres caractéristiques et avantages de l'invention apparaîtront encore dans la description qui suit, relative à un mode particulier, préféré, de réalisation.

Dans cette description :
la figure 1 est une vue en perspective avec arrachement d'un dispositif de contrôle conforme à l'invention,
les figures 2 et 3 sont deux vues en perspective du système utilisé pour la commande en rotation des ailes, en permettant leur pivotement, avec la coque extérieure, autour de la partie intérieure fixe du corps,
les figures 4 et 5 sont à nouveau deux vues en perspective, toujours avec arrachement partiel, du système de commande des ailes,
les figures 6 et 7 illustrent des schémas fonctionnels,

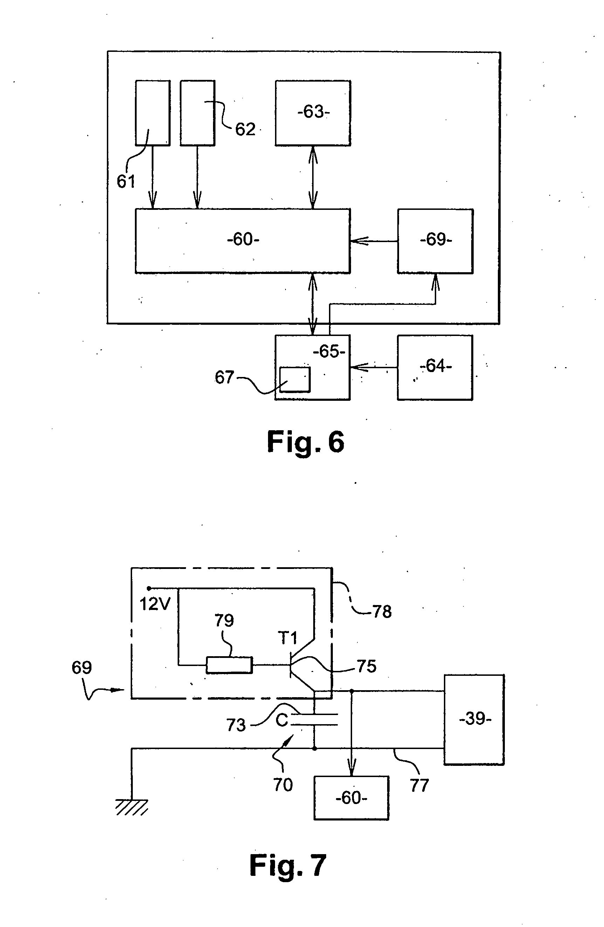

la figure 6 montre l'agencement des principaux moyens électroniques de commande,
la figure 7 détaille une réalisation préférée du dispositif de gestion de la puissance à délivrer aux moteurs,

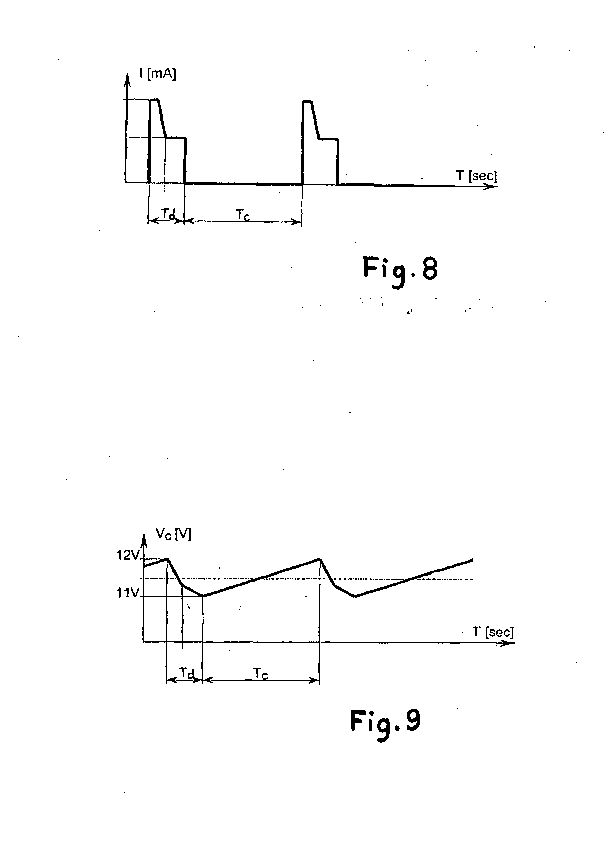

et les figures 8 et 9 montrent deux courbes illustratives d'un fonctionnement préféré des moteurs.

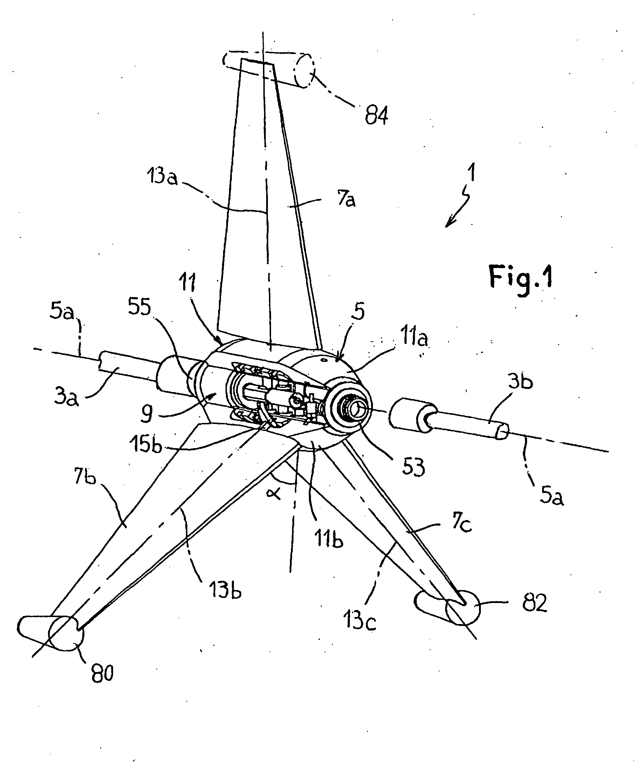

Sur la figure 1, on voit un dispositif 1 de maintien et de guidage conforme à l'invention, utilisable pour soutenir et positionner correctement un objet sous-marin remorqué, en particulier une antenne acoustique linéaire remorquée, 3, schématisée ici sous la forme d'un long câble.

Le dispositif 1 comprend un corps central creux 5, et plusieurs ailes stabilisatrices, individuellement orientables 7a, 7b, 7c, ici au nombre de 3.

Le corps 5 présente un axe longitudinal 5a.

Ce corps comprend une partie centrale fixe 9 et une coque extérieure 11 concentrique, montée tournante avec les ailes, autour de la partie centrale et de l'axe 5a, de manière qu'en cas d'obstacle, les ailes puissent s'échapper latéralement, en pivotant autour de l'axe 5a.

Les ailes, qui s'étendent suivant un axe transversal (radial) à l'axe 5a, sont en outre montées pivotantes (sur environ 5 à 30° et de préférence jusqu'à 20° environ) autour de leur axe transversal respectif, 13a, 13b, 13c.

Pour obtenir ces mouvements, de préférence chaque aile est fixée vers son emplanture, telle que 17b pour l'aile 7b, à un arbre radial (arbre 15b s'étendant suivant l'axe 13b pour l'aile 7b).

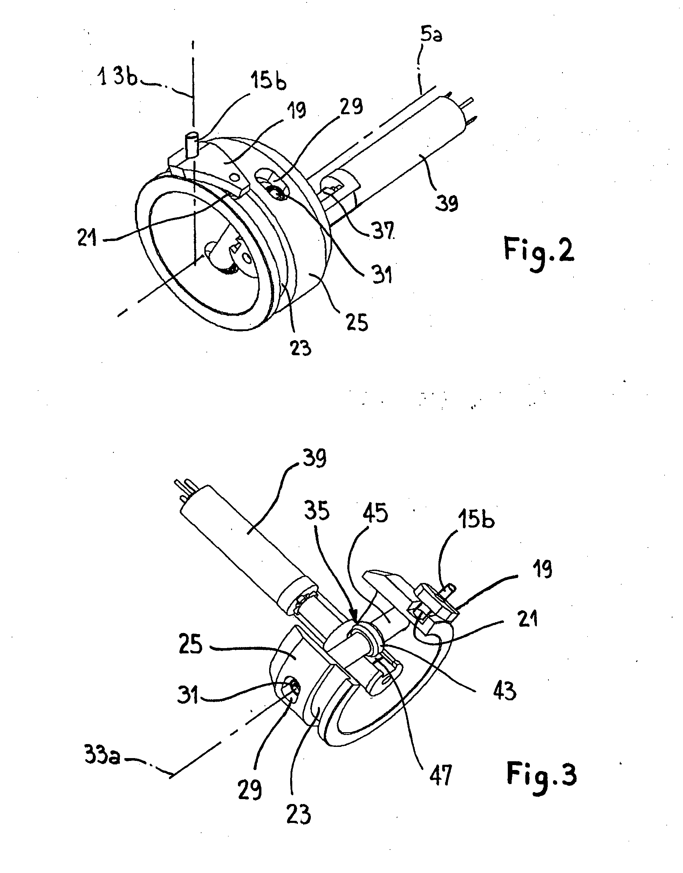

Pour l'explication concernant les ailes, considérons l'aile 7b, le montage des autres ailes étant identique : l'arbre radial 15b traverse la coque extérieure 11 sous laquelle il est relié fixement à une patte transversale 19 pourvue d'un téton ou ergot 21 qui coulisse dans la rainure, ou gorge 23 d'une bague 25 (figures 2 et 3).

La gorge 23 s'étend sur toute la périphérie extérieure de la bague et dans un plan radial à l'axe 5a, concentriquement.

En décalage (suivant cet axe longitudinal 5a) par rapport à la rainure, la bague 25 est traversée par un trou oblong (ou de préférence deux trous diamétralement opposés) 29 dans lequel (chacun desquels) se déplace un doigt 31 (figures 2 et 3).

Le trou oblong 29 présente son axe d'allongement parallèlement à la gorge circulaire 23.

Il est donc dans un plan radial à l'axe 5a.

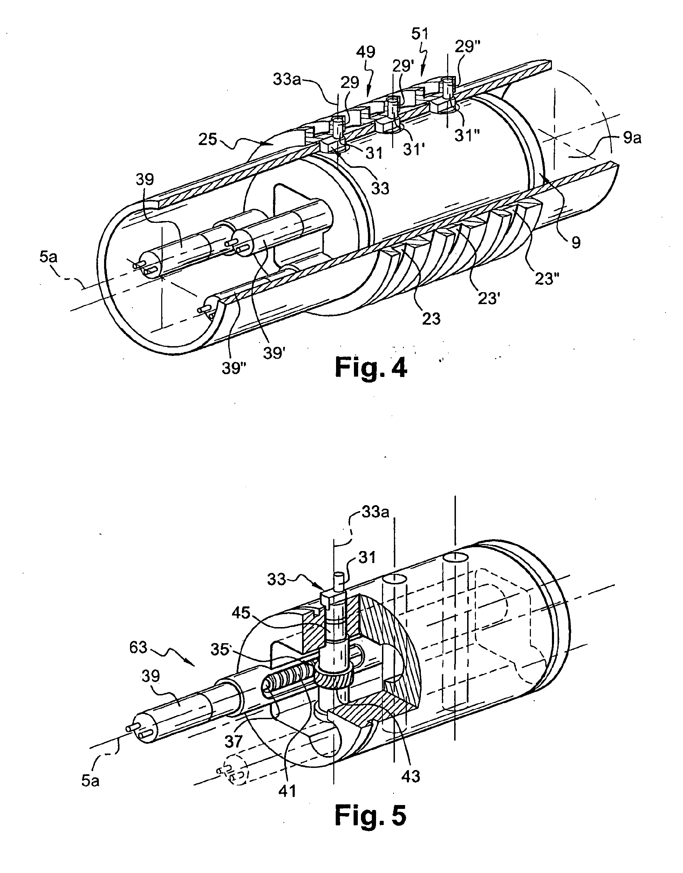

Comme montré également figures 4 ou 5, le doigt 31 est un élément d'un dispositif radial à came (ou excentrique) 33 mû par un renvoi d'angle 35 commandé par l'arbre de sortie 37 (parallèle à l'axe 5a) d'un moteur électrique 39.

Dans le mode de réalisation préféré illustré, l'arbre 37 est plus précisément commandé par un moto réducteur qui entraîne en rotation une vis axiale 41 sur laquelle engrène la roue dentée radiale 43, définissant ainsi le renvoi d'angle 35 (figures 3 et 5).

Radialement, au-delà de la zone dentée 43, la roue se prolonge de part et d'autre par une tige à excentrique qui, avec son doigt 31, définit le dispositif radial à came 33 (figure 5).

Ce dispositif est mû par un arbre 45 (s'étendant dans un plan radial à l'axe 5a) tournant autour de son axe 33a et guidé par la roue 43 qui roule dans une lumière 47 parallèle à l'axe 5a, sous la commande de l'arbre de sortie 37 (figure 3).

Avec un tel système de commande des ailes, les bagues 25, 49, 51 sont décalées suivant l'axe 5a, de même que les trois ailes (voir figures 1, 4 et 5 réunies).

L'orientation angulaire par rapport à l'axe 5a de chaque aile peut ainsi être adaptée en fonction de la situation.

Telle est la disposition des ailes avec, en mode opérationnel, dans l'eau et en situation normale, stable, une aile supérieure verticale 7a et deux ailes inférieures inclinées 7b, 7c ayant de préférence le même écart angulaire a par rapport à la verticale passant par l'aile 7a. Ceci permet d'assurer un contrôle de la profondeur et de la position relative entre deux lignes d'objets remorqués normalement sensiblement parallèles.

Pour un contrôle de la profondeur, seules les deux ailes inférieures 7b, 7c sont inclinées autour de leur axe de rotation 13b, 13c, de sorte que le dispositif 1 applique une force résultante verticale sur les tronçons amont et aval 3a, 3b de l'objet remorqué auquel il est relié (on suppose bien entendu que l'ensemble avance).

Pour un contrôle latéral (plan horizontal), l'aile supérieure 7a est tournée autour de son axe 13a, de même pour les deux ailes inférieures 7b, 7c (en sens inverse l'une de l'autre) afin d'annuler le moment selon l'axe 5a dans le but de conserver l'ensemble du système en position verticale.

Si l'ensemble objet tracté et dispositif 1 avance, entraîné typiquement par un navire de surface, la force résultante appliquée est dirigée latéralement par rapport à l'axe 5a, vers la gauche ou la droite.

Pour une liaison avec les tronçons d'objets tractés amont et aval 3a, 3b (liaison mécanique, électrique, circulation de signaux ...), la partie centrale fixe 9 du corps 5 est munie, à ses extrémités longitudinales opposées, respectivement d'un premier et d'un second embouts 53, 55 de raccordement conçus pour engager des embouts complémentaires prévus sur les extrémités correspondantes desdits tronçons amont et aval 10, 20 de l'objet tracté.

En outre, en particulier pour autoriser un enroulement de la ligne tracté sur de gros rouleaux, en entraînant au passage les dispositifs 1 périodiquement disposés le long des tronçons concernés, la coque extérieure 11 et les ailes 7a, 7b, 7c sont séparables de la partie intérieure 9 du corps.

Pour cela, les ailes et la partie intérieure 9 peuvent comprendre un système d'interverrouillage démontable, en soit connu (par exemple un système à baïonnette, ou encore une liaison vissée).

Quant à la coque extérieure 11, elle est avantageusement réalisée en deux demi-coquilles 11a, 11b réunies ensemble suivant un plan contenant l'axe 5a et là encore relié par un système d'interverrouillage démontable, en soi connu.

Comme indiqué ci-dessus, le dispositif 1 assure donc entre autre un contrôle de profondeur en générant une force verticale sur l'objet tracté (au moins les tronçons qui lui sont adjacents) pour établir au moins ces tronçons à une profondeur prédéfinie.

Le contrôle de la profondeur est de préférence un contrôle local utilisant un signal de pression.

Ce signal peut être fourni par un capteur local de pression 61 disposé à l'intérieur du dispositif 1 (corps 9 ; et plus particulièrement zone 9a réservée à l'électronique sur la figure 4).

Une autre possibilité consiste à utiliser un signal de pression fourni par l'extérieur par exemple par un câble relié à l'électronique du dispositif 1. On peut alors utiliser un capteur disposé à distance et communiquant avec l'unité électronique de traitement (ou microcontrôleur 60 montré figure 6) et relié bien entendu au moyen de commande de l'inclinaison des ailes déjà détaillé.

Chaque aile est en outre avantageusement reliée à un capteur de position 62 logé en 9a et mesurant l'angle d'inclinaison (angle absolu) de chaque aile autour de son axe radial.

Cette information de position est chargée dans l'électronique embarquée (microcontrôleur 60) pour un contrôle par une boucle de contrôle.

Pour contrôler la position latérale du dispositif 1 et de ses tronçons adjacents 3a, 3b, l'électronique embarquée charge en mémoire des données relatives à la ligne d'objets tractée qui lui est sensiblement parallèle (si une telle ligne existe), de sorte que le dispositif concerné est adapté pour appliquer, (via les ailes mues par leurs actionneurs 63 ; figures 5 et 6) une force latérale aux tronçons adjacents sur lesquels elle peut agir, pour adapter la distance relative avec la (les) ligne(s) proche(s).

Les données de distance peuvent en particulier être fournies par un capteur, en particulier un capteur acoustique 64, fournissant ces données au microcontrôleur 60, par tout moyen de communication approprié (câble en particulier). Le capteur 64 peut être logé en 9a, ou situé à distance du dispositif 1.

Les actionneurs 63 de la figure 6 se rapportent en particulier aux moteurs électriques (tels que 39) et aux dispositifs à renvoi d'angle 35 et à came (ou excentrique) 33 présentés avant (cf figure 5).

De préférence, si le dispositif 1 comprend trois ailes, on trouvera dans le corps 5, trois moteurs (voir figure 4) et trois dispositifs 33, 35 de commande associés à trois bagues circulaires (25, 49, 51 sur la figure 4) coulissantes parallèlement à l'axe 5a et disposées donc l'une derrière l'autre, chacune avec une gorge extérieure périphérique (respectivement 23, 23', 23'') dans laquelle se déplace et tourne si nécessaire le doigt de l'excentrique correspondant, chaque bague étant traversée, derrière, par la lumière (29, 29' ou 29") où s'engage le doigt (31, 31', 31") de la came 33 concernée.

Revenant figure 6, on constate que le contrôle de la profondeur est donc assuré avantageusement par un capteur 61 de pression sensible à la pression dans l'environnement du dispositif.

Un système de gestion de la puissance 69 (plus détaillé sur la figure 7) permet en outre de s'exonérer du problème de la relativement faible puissance électrique disponible.

Ainsi, dès lors que les moteurs 39, 39', 39'' consomment en fonctionnement une puissance relativement importante, on va les faire fonctionner par intermittence, pour atteindre par cycles successifs de fonctionnement et d'arrêt, l'angle d'inclinaison voulu pour les ailes 7a, 7b, 7c.

En agissant ainsi, on assure une consommation électrique moyenne acceptable.

Pour lisser les pics de consommation, on utilise les cycles de charges/décharges de (super) condensateurs, de préférence plusieurs en série.

Le schéma de principe de la figure 7 et les figures 8 et 9 montrent que le cycle total du (de chaque) condensateur 70 est Tc + Td (correspondant de préférence à la période des cycles d'acquisition en entrée du capteur acoustique 64).

Si le (chaque) moteur (tel que 39), ici concerné fonctionne sous une tension initiale de 12 volts (fournie par une batterie de (super) condensateurs repérée 65 intégrée à l'interface 67 qui reçoit les données du capteur 64 pour les transmettre après traitement vers le microcontrôleur 60, figure 6), on choisira par exemple de l'utiliser entre, environ 11 et 12 volts (figures 7 et 9).

On voit figure 8 comment évolue en conséquence l'intensité du courant disponible pour le moteur. Un courant d'intensité constant (provenant de la batterie) charge continûment la capacité 73 branchée entre le transistor 75 et la masse 77 (figure 7).

Sous la commande du microcontrôleur 60, la source de courant 78 (avec par exemple une batterie d'accumulateurs, le transistor 75 et la résistance 79) établit l'intensité maximum de courant disponible pour le moteur 39, lorsque la charge du condensateur 73 est atteinte (figures 7 et 9).

Avec par exemple six condensateurs, de 5F chacun, en série, montés selon le principe de fonctionnement précité et trois motoréducteurs à courant continu (DC), on doit pouvoir faire fonctionner ces moteurs pendant environ 2 à 4 secondes (Td) pour des temps intermédiaire d'arrêt (Tc) de l'ordre de 30 à 40 secondes, la puissance totale délivrée pouvant être de l'ordre de 4 à 5 watts, avec un fonctionnement entre environ 10 et 12 volts et une puissance moyenne continue plus faible.

La décharge dans les moteurs pourra être déclenchée/interrompue en comparant la tension des condensateurs avec un maximum théorique préprogrammé et des tensions minimum également prédéfinies.

Une telle solution permettra en outre, en cas d'urgence, de décharger dans les moteurs pendant un temps supérieur à celui prévu, ceci nécessitant toutefois bien entendu un temps de recharge plus long.

Concernant maintenant la position angulaire des ailes, celle-ci sera avantageusement mesurée sur l'axe de rotation 33a des dispositifs à excentrique 33.

On peut prévoir pour cela une mesure directe, en utilisant un capteur rotatif en particulier un capteur sans contact à effet Hall.

S'il s'agit d'un capteur d'angle absolu (solution préférée), le capteur 62 prévu pour chaque aile devra être calibré pour fonctionner de façon opérationnelle.

Pour l'équilibrage du dispositif 1 en fonctionnement, on conseille par ailleurs que les deux ailes inférieures 7b, 7c soient pourvues chacune, à leur extrémité libre, d'une masse pesante (plomb), respectivement 80, 82 sur la figure 1, l'aile supérieure 7a étant éventuellement pourvue, également à son extrémité libre, d'un bourrelet 84 renfermant un bloc de mousse légère ou équivalent, de faible densité, de préférence de densité inférieure à celle de l'eau, donc flottante.

## Revendications

1. Dispositif pour contrôler la navigation d'un objet sous-marin remorqué (3), le dispositif comprenant :
- un corps (5) présentant un axe longitudinal (5a) et comprenant:
* une partie intérieure (9) fixe en rotation par rapport à l'objet sous-marin remorqué (3) et pourvue de moyens (53, 55) de fixation pour la fixer de manière démontable audit objet,
^{*} et une coque extérieure (11) mobile en rotation vis-à-vis de la partie intérieure fixe (9), autour dudit axe longitudinal (5a),
- plusieurs ailes stabilisatrices (7a, 7b, 7c), chacune liée au corps et s'étendant suivant un axe (13a, 13b, 13c) transversal à l'axe longitudinal de ce corps, chaque aile étant orientable par rapport au corps par pivotement autour de son axe transversal, par l'intermédiaire d'un système (31,35,39,45) d'entraînement en rotation et de moyens de contrôle (63), pour modifier l'angle d'inclinaison desdites ailes, chaque aile (7a, 7b, 7c) étant liée à un arbre (15b) s'étendant sensiblement radialement par rapport audit axe longitudinal (5a),chaque arbre (15b) d'aile (7a, 7b, 7c) traversant la coque extérieure mobile (11) pour être monté tournant, avec cette coque extérieure et suivant ledit axe longitudinal, autour de ladite partie intérieure (9) où l'arbre concerné coopère avec ledit système d'entraînement en rotation de chaque aile (7a,7b,7c) autour de son axe transversal correspondant(13a,13b,13c)
**caractérisé en ce que** le dispositif comprend au moins trois ailes (7a, 7b, 7c) disposées autour de l'axe longitudinal, avec deux ailes inférieures définissant entre elles un « V » et une aile supérieure (7a) sensiblement verticale, lesdits moyens de contrôle (63) agissant sur ces ailes pour adapter la profondeur d'immersion et la position latérale du dispositif par rapport à un axe de référence (5a) le long duquel s'étend globalement l'objet sous-marin remorqué.

2. Dispositif selon la revendication 1, **caractérisé en ce que** le système d'entraînement en rotation des ailes (7a, 7b, 7c) comprend, pour chaque aile, un ergot (21) coopérant avec l'arbre (15b) de l'aile. correspondante, l'ergot étant engagé dans une gorge circulaire (23, 23', 23") ménagée dans une bague (25, 49, 51) s'étendant autour de ladite partie intérieure fixe (9), coaxialement, l'ergot (21) glissant dans la gorge lorsque chaque aile et la coque extérieure mobile tournent autour dudit axe longitudinal du corps (5).

3. Dispositif selon l'une quelconque des revendications précédentes, **caractérisé en ce que** le système d'entraînement en rotation de chaque aile (7a,7b,7c), lié donc à ladite partie intérieure (9), comprend au moins un moteur électrique (39, 39', 39") disposé dans cette partie intérieure (9).

4. Dispositif selon l'une quelconque des revendications précédentes, **caractérisé en ce qu'**il comprend une électronique de traitement (60) embarquée, disposée (en 9a) dans ladite partie intérieure (9).

5. Dispositif selon la revendication 1 ou 2, **caractérisé en ce que** :
- il comprend une électronique de traitement (60) embarquée et l'entraînement en rotation de chaque ailé (7a,7b,7c) est motorisé (39, 39', 39"),
- et, cette motorisation (39, 39', 39") des ailes, ainsi que l'électronique embarquée (60) sont exclusivement disposées dans ladite partie intérieure (9,9a) du corps (5), de sorte qu'aucun passage de puissance électrique ni de communication de données n'existe entre la partie intérieure (9) et la coque extérieure (11) dudit corps.

6. Dispositif selon l'une quelconque des revendications précédentes, caractérisé en ce le système d'entraînement en rotation de chaque aile (7a,7b,7c) comprend au moins un moteur électrique (39,39',39") alimenté par une source de courant (78) et/ou par l'intermédiaire de condensateurs (65,73) disposé/disposés dans ladite partie intérieure (9).

7. Dispositif selon la revendication 3 ou 6, **caractérisé en ce que** le/chaque moteur électrique (39,39',39") d'entraînement en rotation de chaque/des aile/ailes (7a, 7b, 7c) autour de son axe transversal fonctionne par intermittence.

8. Dispositif selon l'une quelconque des revendications 1 à 7, **caractérisé en ce que** les deux ailes inférieures présentent le même écart angulaire par rapport à une verticale passant par l'aile supérieure.

9. Dispositif selon l'une quelconque des revendications 1 à 7, **caractérisé en ce que** lesdites ailes (7a, 7b, 7c) sont pesantes et disposées en trièdre autour de l'axe longitudinal (5a), la mobilité en rotation de ladite coque extérieure (11) vis-à-vis de la partie intérieure fixe (9), autour de cet axe longitudinal, conférant, en particulier dans l'eau, une sensible verticalité à l'aile supérieure (7a) pour n'importe quelle orientation de ladite partie intérieure fixe autour de cet axe longitudinal.

10. Dispositif selon la revendication 2 ou l'une des revendications 3 à 7 rattachée à elle, **caractérisé en ce que** le système d'entraînement en rotation de chaque aile (7a,7b,7c) autour de son axe transversal comprend un excentrique (33) lié, à une première extrémité, à l'arbre transversal de cette aile et, à une seconde extrémité, à l'ergot (31, 31', 31") engagé dans la gorge circulaire de la bague correspondante (25, 49, 51), laquelle est montée coulissante autour de ladite partie intérieure fixe (9), coaxialement à elle, de sorte que la rotation de l'aile considérée autour de son axe transversal s'opère par déplacement de ladite bague suivant l'axe longitudinal du corps.

11. Dispositif selon l'une quelconque des revendications précédentes, **caractérisé en ce que** l'entraînement en rotation de chaque aile (7a, 7b, 7c) autour de son axe transversal est assuré par l'intermédiaire d'une came (31, 31', 31" ; 33) ayant un axe de rotation décalé par rapport à celui de l'aile correspondante et se déplaçant dans une lumière (29, 29', 29") s'étendant sur un secteur angulaire d'un plan sensiblement radial audit axe longitudinal, la came étant mue par un arbre (45) tournant autour d'un axe (33a) transversal à cet axe longitudinal, l'arbre étant entraîné par une roue (43) mue en rotation par un dispositif rotatif à renvoi d'angle (35) entraîné lui-même par un moyen d'entraînement rotatif (37, 41) tournant autour d'un axe sensiblement parallèle à l'axe longitudinal (5a) du corps.

12. Dispositif selon les revendications 2 et 11, **caractérisé en ce que** l'arbre tournant (45) présente à son extrémité libre un excentrique (31) qui se déplace dans ladite lumière (29), définissant ainsi la came (33) qui assure l'orientation angulaire de chaque aile, la lumière étant ménagée dans ladite bague (25, 49, 51) qui s'étend autour de la partie intérieure fixe (9) du corps (5), de sorte que la rotation de l'aile considérée autour de son axe transversal s'opère par déplacement de ladite bague suivant l'axe longitudinal (5a) du corps.

13. Dispositif selon l'une quelconque des revendications précédentes, **caractérisé en ce que**:
- la coque extérieure mobile du corps comprend deux demi-coquilles (11a, 11b) séparables l'une vis à vis de l'autre et vis à vis de la partie intérieure fixe (9),
- et l'arbre de rotation (15b) de chaque aile (7a, 7b, 7c) est lié de façon amovible à ladite partie intérieure fixe (9),
de sorte que les ailes et la coque extérieure mobile (11) du corps sont séparables vis-à-vis de la partie intérieure de ce corps, en particulier lorsque celle-ci est raccordée audit objet sous-marin remorqué.

14. Dispositif selon la revendication 2 ou selon l'une des revendications 3 à 13 rattachée à la revendication 2, **caractérisé en ce que** qu'il comprend au moins autant de dites gorges circulaires (23, 23' , 23") que de dites ailes (7a, 7b, 7c), ces gorges circulaires étant disposées successivement les unes à la suite des autres suivant ledit axe longitudinal (5a), de sorte que les ailes sont décalées les unes par rapport aux autres suivant cet axe longitudinal.

15. Dispositif selon l'une quelconque des revendications 3,5 ou 6, **caractérisé en ce que** le/chaque moteur (39, 39', 39") fonctionne par intermittence pour dévier l'aile/les ailes concernées, le/chaque moteur étant pour cela relié à au moins un condensateur (70, 73) présentant des temps de charge et de décharge, le/chaque moteur étant mis en fonctionnement pendant le temps de décharge (Td) du/des condensateurs et étant arrêté pendant son/leur temps de charge (Tc).

16. Dispositif selon l'une quelconque des revendications 3,5 ou 6, **caractérisé en ce que** la puissance utile pour faire pivoter chaque aile (7a, 7b, 7c) autour de son axe transversal est fournie par l'intermédiaire d'au moins un dit moteur (39, 39', 39") qui fonctionne par intermittence pour mouvoir les ailes, sous la commande d'au moins un condensateur (70, 73) présentant des temps de charge et de décharge, le moteur étant mis en fonctionnement pendant le temps de décharge (Td) du/des condensateurs et étant arrêté pendant son/leur temps de charge (Tc).

17. Dispositif selon l'une des revendications 15 ou 16, **caractérisé en ce que** le condensateur (73) appartient à un circuit électrique comprenant une source de courant ajustable.

18. Dispositif selon l'une quelconque des revendications précédentes, **caractérisé en ce qu'**un capteur (62) d'angle absolu est disposé dans la partie intérieure (9) fixe du corps, pour relever l'angle d'orientation de chaque aile (7a, 7b, 7c).

## Patentansprüche

1. Vorrichtung zum Steuern eines geschleppten Unterwasserobjektes (3), wobei die Vorrichtung umfasst:
- einen Körper (5), der eine Längsachse (5a) aufweist und umfasst:
^{*} einen inneren Teil (9), der drehfest in Bezug zu dem geschleppten Unterwasserobjekt (3) angeordnet und mit Befestigungsmitteln (53, 55) versehen ist, um ihn demontierbar an dem Objekt zu montieren,
^{*} und eine äußere Schale (11), die gegenüber dem festen inneren Teil (9) um die Längsachse (5a) drehbeweglich ist,
- mehrere Stabilisationsflügel (7a, 7b, 7c), die jeweils mit dem Körper verbunden sind und sich entlang einer Achse (13a, 13b, 13c) quer zur Längsachse dieses Körpers erstrecken, wobei jeder Flügel in Bezug zum Körper durch Schwenken um seine Querachse mit Hilfe eines Drehantriebssystems (31, 35, 39, 45) und von Steuermitteln (63) ausrichtbar ist, um den Neigungswinkel der Flügel zu verändern, wobei jeder Flügel (7a, 7b, 7c) mit einer Welle (15b) verbunden ist, die sich im Wesentlichen radial in Bezug zur Längsachse (5a) erstreckt, wobei jede Welle (15b) eines Flügels (7a, 7b, 7c) durch die bewegliche äußere Schale (11) hindurchgeht, um mit dieser äußeren Schale und entlang der Längsachse drehbar um den inneren Teil (9), wo die betreffende Welle mit dem System zum Drehantrieb jedes Flügels (7a, 7b, 7c) um seine entsprechende Querachse (13a, 13b, 13c) zusammenwirkt, montiert zu werden,
**dadurch gekennzeichnet, dass** die Vorrichtung mindestens drei Flügel (7a, 7b, 7c) umfasst, die um die Längsachse angeordnet sind, mit zwei unteren Flügeln, die zwischen sich ein "V" definieren, und einem im Wesentlichen vertikalen oberen Flügel (7a), wobei die Steuermittel (63) auf diese Flügel einwirken, um die Eintauchtiefe und die seitliche Position der Vorrichtung in Bezug zu einer Bezugsachse (5a), entlang der sich das geschleppte Unterwasserobjekt global erstreckt, anzupassen.

2. Vorrichtung nach Anspruch 1, **dadurch gekennzeichnet, dass** das Drehantriebssystem der Flügel (7a, 7b, 7c) für jeden Flügel einen Haken (21) umfasst, der mit der Welle (15b) des entsprechenden Flügels zusammenwirkt, wobei der Haken in eine kreisförmige Rille (23, 23', 23") eingreift, die in einem Ring (25, 49, 51) ausgenommen ist, der sich um den festen inneren Teil (9) koaxial erstreckt, wobei der Haken (21) in der Rille gleitet, wenn sich jeder Flügel und die bewegliche äußere Schale um die Längsachse des Körpers (5) drehen.

3. Vorrichtung nach einem der vorhergehenden Ansprüche, **dadurch gekennzeichnet, dass** das Drehantriebssystem jedes Flügels (7a, 7b, 7c), das somit mit dem inneren Teil (9) verbunden ist, mindestens einen Elektromotor (39, 39', 39") umfasst, der in diesem inneren Teil (9) angeordnet ist.

4. Vorrichtung nach einem der vorhergehenden Ansprüche, **dadurch gekennzeichnet, dass** sie eine eingebaute Bearbeitungselektronik (60) umfasst, die in dem inneren Teil (9) angeordnet ist (bei 9a).

5. Vorrichtung nach Anspruch 1 oder 2, **dadurch gekennzeichnet, dass**
- sie eine eingebaute Bearbeitungselektronik (60) umfasst und der Drehantrieb jedes Flügels (7a, 7b, 7c) motorisiert ist (39, 39', 39"),
- und diese Motorisierung (39, 39', 39") der Flügel sowie die eingebaute Elektronik (60) ausschließlich in dem inneren Teil (9, 9a) des Körpers (5) angeordnet sind, so dass kein Durchgang von elektrischer Leistung oder einer Datenkommunikation zwischen dem inneren Teil (9) und der äußeren Schale (11) des Körpers vorhanden ist.

6. Vorrichtung nach einem der vorhergehenden Ansprüche, **dadurch gekennzeichnet, dass** das Drehantriebssystem jedes Flügels (7a, 7b, 7c) mindestens einen Elektromotor (39, 39', 39") umfasst, der von einer Stromquelle (78) und/oder mit Hilfe von Kondensatoren (65, 73), die in dem inneren Teil (9) angeordnet ist/sind, gespeist wird.

7. Vorrichtung nach Anspruch 3 oder 6, **dadurch gekennzeichnet, dass** der/jeder Elektromotor (39, 39', 39") zum Drehantrieb jedes/der Flügel(s) (7a, 7b, 7c) um seine Querachse intermittierend funktioniert.

8. Vorrichtung nach einem der Ansprüche 1 bis 7, **dadurch gekennzeichnet, dass** die beiden unteren Flügel denselben Winkelabstand zu einer durch den oberen Flügel verlaufenden Vertikale aufweisen.

9. Vorrichtung nach einem der Ansprüche 1 bis 7, **dadurch gekennzeichnet, dass** die Flügel (7a, 7b, 7c) schwer sind und in einem Trieder um die Längsachse (5a) angeordnet sind, wobei die Drehbeweglichkeit der äußeren Schale (11) gegenüber dem festen inneren Teil (9) um diese Längsachse insbesondere im Wasser dem oberen Flügel (7a) eine wesentliche Vertikalität für jede beliebige Ausrichtung des festen inneren Teils um diese Längsachse verleiht.

10. Vorrichtung nach Anspruch 2 oder einem der an diesen angeschlossenen Ansprüche 3 bis 7, **dadurch gekennzeichnet, dass** das Drehantriebssystem jedes Flügels (7a, 7b, 7c) um seine Querachse einen Exzenter (33) umfasst, der an einem ersten Ende mit der Querwelle dieses Flügels und an einem zweiten Ende mit dem Haken (31, 31', 31") verbunden ist, der in der kreisförmigen Rille des entsprechenden Ringes (25, 49, 51) in Eingriff ist, welcher gleitend um den festen inneren Teil (9) koaxial zu diesem montiert ist, so dass die Drehung des betreffenden Flügels um seine Querachse betrachtet durch Verschieben des Ringes entlang der Längsachse des Körpers erfolgt.

11. Vorrichtung nach einem der vorhergehenden Ansprüche, **dadurch gekennzeichnet, dass** der Drehantrieb jedes Flügels (7a, 7b, 7c) um seine Querachse durch eine Nocke (31, 31', 31"; 33) gewährleistet ist, die eine in Bezug zu jener des entsprechenden Flügels versetzte Drehachse besitzt und sich in einer Öffnung (29, 29', 29") bewegt, die sich auf einem Winkelsektor einer im Wesentlichen radialen Ebene zur Längsachse erstreckt, wobei die Nocke von einer Welle (45) bewegt wird, die sich um eine Querachse (33a) zu dieser Längsachse dreht, wobei die Welle von einem Rad (43) angetrieben wird, das in Drehung durch eine Drehvorrichtung mit Winkelumkehr (35) bewegt wird, die selbst von einem drehenden Antriebsmittel (37, 41) angetrieben wird, das sich um eine Achse im Wesentlichen parallel zur Längsachse (5a) des Körpers dreht.

12. Vorrichtung nach den Ansprüchen 2 und 11, **dadurch gekennzeichnet, dass** die drehende Welle (45) an ihrem freien Ende einen Exzenter (31) aufweist, der sich in der Öffnung (29) bewegt und so die Nocke (33) definiert, die die Winkelausrichtung jedes Flügels gewährleistet, wobei die Öffnung in dem Ring (25, 49, 51) ausgenommen ist, der sich um den festen inneren Teil (9) des Körpers (5) erstreckt, so dass die Drehung des betreffenden Flügels um seine Querachse durch Verschieben des Ringes entlang der Längsachse (5a) des Körpers erfolgt.

13. Vorrichtung nach einem der vorhergehenden Ansprüche, **dadurch gekennzeichnet, dass**:
- die bewegliche äußere Schale des Körpers zwei voneinander und von dem festen inneren Teil (9) trennbare Halbschalen (11a 11b) umfasst,
- und die Drehwelle (15b) jedes Flügels (7a, 7b, 7c) abnehmbar mit dem festen inneren Teil (9) verbunden ist,
so dass die Flügel und die bewegliche äußere Schale (11) des Körpers gegenüber dem inneren Teil dieses Körpers trennbar sind, insbesondere wenn dieser mit dem geschleppten Unterwasserobjekt verbunden ist.

14. Vorrichtung nach Anspruch 2 oder einem der mit dem Anspruch 2 verbundenen Ansprüche 3 bis 13, **dadurch gekennzeichnet, dass** sie mindestens ebenso viele kreisförmige Rillen (23, 23', 23") wie Flügel (7a, 7b, 7c) umfasst, wobei diese kreisförmigen Rillen nacheinander entlang der Längsachse (5a) angeordnet sind, so dass die Flügel zueinander entlang dieser Längsachse versetzt sind.

15. Vorrichtung nach einem der Ansprüche 3, 5 oder 6, **dadurch gekennzeichnet, dass** der/jeder Motor (39, 39', 39") intermittierend funktioniert, um den/die betreffenden Flügel abzulenken, wobei der/jeder Motor dazu mit mindestens einem Kondensator (70, 73) verbunden ist, der Lade- und Entladezeiten aufweist, wobei der/jeder Motor während der Entladezeit (Td) des/der Kondensators/-en in Betrieb gesetzt und während seiner/ihrer Ladezeit (Tc) angehalten wird.

16. Vorrichtung nach einem der Ansprüche 3, 5 oder 6, **dadurch gekennzeichnet, dass** die Nutzleistung, um jeden Flügel (7a, 7b, 7c) um seine Querachse zu schwenken, durch mindestens einen Motor (39, 39', 39") geliefert wird, der intermittierend funktioniert, um die Flügel zu bewegen, unter der Steuerung mindestens eines Kondensators (70, 73), der Lade- und Entladezeiten aufweist, wobei der Motor während der Entladezeit (Td) des/der Kondensators/-en in Betrieb gesetzt und während seiner/ihrer Ladezeit (Tc) angehalten wird.

17. Vorrichtung nach einem der Ansprüche 15 oder 16, **dadurch gekennzeichnet, dass** der Kondensator (73) einer elektrischen Schaltung, umfassend eine einstellbare Stromquelle, angehört.

18. Vorrichtung nach einem der vorhergehenden Ansprüche, **dadurch gekennzeichnet, dass** ein Absolutwinkelsensor (62) in dem festen inneren Teil (9) des Körpers angeordnet ist, um den Ausrichtungswinkel jedes Flügels (7a, 7b, 7c) anzuheben.

## Claims

1. Device for controlling the navigation of a towed underwater object (3), the device comprising:
- a body (5) having a longitudinal axis (5a) and comprising:
^{*} a stationary inner portion (9) that is constrained in rotation relative to the towed underwater object (3) and provided with fastener means (53, 55) for fastening it releasably to said object, and
^{*} an outer shell (11) that is movable in rotation relative to the stationary inner portion (9) about said longitudinal axis (5a),
- a plurality of stabilizer fins (7a, 7b, 7c), each of which coupled to the body and extending along an axis (13a, 13b, 13c) that is transverse to the longitudinal axis of said body, each fin being orientable relative to the body by pivoting about its transverse axis by means of a rotary drive system (31, 35, 39, 45) and by control means (63), so as to modify the angles of inclination of said fins, each fin (7a, 7b, 7c) being coupled to a shaft (15b) extending substantially radially relative to said longitudinal axis (5a), each shaft (15b) of a fin (7a, 7b, 7c) passing through the movable outer shell (11) so as to be mounted to turn, with this outer shell and about said longitudinal axis, about said inner portion (9), in which the shaft concerned cooperates with said rotary drive system for pivoting each fin (7a, 7b, 7c) about its corresponding transverse axis (13a, 13b, 13c),
**characterized in that** the device comprises at least three fins (7a, 7b, 7c) disposed about the longitudinal axis, with two lower fins defining between them a "V" and a upper fin (7a) that is substantially vertical, said control means (63) acting on said fins to adapt the depth of immersion and the lateral position of the device relative to a reference axis (5a) along which the towed underwater object globally extends.

2. Device according to Claim 1, **characterized in that** the rotary drive system for pivoting the fins (7a, 7b, 7c) comprises, for each fin, a lug (21) cooperating with the shaft (15b) of the corresponding fin, the lug being engaged in a circular groove (23, 23', 23") provided in a ring (25, 49, 51) extending coaxially around said stationary inner portion (9), the lug (21) sliding in the groove when each fin and the movable outer shell turn about said longitudinal axis of the body (5).

3. Device according to either one of the preceding claims, **characterized in that** the rotary drive system for pivoting each fin (7a, 7b, 7c), which is therefore coupled to said stationary inner portion (9), comprises at least one electric motor (39, 39', 39") disposed in this stationary inner portion (9).

4. Device according to any one of the preceding claims, **characterized in that** it comprises onboard processing electronics (60) disposed (at 9a) in said stationary inner portion (9).

5. Device according to Claim 1 or 2, **characterized in that**:
- it comprises onboard processing electronics (60) and each fin (7a, 7b, 7c) is driven in rotation by a motorized system (39, 39', 39"), and
- this motorized system (39, 39', 39") for driving the fins and the onboard electronics (60) are exclusively disposed in said stationary inner portion (9, 9a) of the body (5) so that no electrical power or data passes between the inner portion (9) and the outer shell (11) of said body.

6. Device according to any one of the preceding claims, **characterized in that** the rotary drive system for pivoting each fin (7a, 7b, 7c) comprises at least one electric motor (39, 39', 39") powered by a current source (78) and/or by capacitors (65, 73) disposed in said inner portion (9).

7. Device according to Claim 3 or 6, **characterized in that** the/each electric motor (39, 39' , 39") for driving each/the fin(s) (7a, 7b, 7c) in rotation about its transverse axis functions intermittently.

8. Device according to any one of Claims 1 to 7, **characterized in that** the two lower fins have the same angular separation relative to a vertical passing through the upper fin.

9. Device according to any one of Claims 1 to 7, **characterized in that** said fins (7a, 7b, 7c) are weighty and disposed in a trihedral configuration about the longitudinal axis (5a), the mobility in rotation of said outer shell (11) relative to the stationary inner portion (9) about this longitudinal axis conferring, in particular when in the water, a substantial verticality on the upper fin (7a) regardless of the orientation of said stationary inner portion about this longitudinal axis.

10. Device according to Claim 2 or any one of Claims 3 to 7 when dependent thereon, **characterized in that** the rotary drive system for pivoting each fin (7a, 7b, 7c) about its transverse axis comprises an eccentric (33) coupled at a first end to the transverse shaft of that fin and at a second end to the lug (31, 31', 31") engaged in the circular groove of the corresponding ring (25, 49, 51), which ring is mounted slidably and coaxially about said stationary inner portion (9) so that the fin concerned pivots about its transverse axis by the ring moving along the longitudinal axis of the body.

11. Device according to any one of the preceding claims, **characterized in that** the each fin (7a, 7b, 7c) is pivoted about its transverse axis by means of a cam (31, 31', 31" ; 33) having a pivot axis that is offset relative to the pivot axis of the corresponding fin and that is mounted to move in a slot (29, 29', 29") extending over an angular sector of a plane substantially radial relative to said longitudinal axis, the cam being driven by a shaft (45) mounted to turn about an axis (33a) that is transverse to said longitudinal axis, the shaft being driven by a wheel (43) that is driven in rotation by a rotary device (35) having an angular transmission itself driven by a rotary drive mean (37, 41) mounted to turn about an axis that is substantially parallel to the longitudinal axis (5a) of the body.

12. Device according to Claims 2 and 11, **characterized in that** the rotary shaft (45) has at its free end an eccentric (31) which is mounted to move in said slot (29), thus defining the cam (33) that defines the angular orientation of each fin, the slot being provided in said ring (25, 49, 51) which extends about the stationary inner portion (9) of the body (5) so that the fin concerned pivots about its transverse axis by said ring moving along the longitudinal axis (5a) of the body.

13. Device according to any one of the preceding claims, **characterized in that**:
- the movable outer shell of the body comprises two half-shells (11a, 11b) separable from each other and from the stationary inner portion (9), and
- the pivot shaft (15b) of each fin (7a, 7b, 7c) is coupled removably to said stationary inner portion (9),
so that the fins and the movable outer shell (11) of the body are separable from the inner portion of this body, in particular when said inner portion is connected to said towed underwater object.

14. Device according to Claim 2 or any one of Claims 3 to 13 when dependent on Claim 2, **characterized in that** it comprises at least as many of said circular grooves (23, 23', 23") as there are said fins (7a, 7b, 7c), these circular grooves being disposed in succession along said longitudinal axis (5a) so that the fins are offset relative to one another along this longitudinal axis.

15. Device according to any one of Claims 3, 5 or 6, **characterized in that** the/each electric motor (39, 39', 39") functions intermittently to deflect the fin(s) concerned, the/each electric motor being for this purpose connected to at least one capacitor (70, 73) having charging and discharging times, the/each electric motor being switched on during the discharging time (Td) of the capacitor(s) and being switched off during the charging time (Tc) thereof.

16. Device according to any one of Claims 3, 5 or 6, **characterized in that** the power used to pivot each fin (7a, 7b, 7c) about its transverse axis is supplied by said at least one motor (39, 39', 39"), which functions intermittently to move the fins under control of at least one capacitor (70, 73) having charging and discharging times, the motor being switched on during the discharging time (Td) of the capacitor(s) and being switched off during the charging time (Tc) thereof.

17. Device according to either one of Claims 15 or 16, **characterized in that** the capacitor (73) is part of an electrical circuit including an adjustable source of current.

18. Device according to any one of the preceding claims, **characterized in that** an absolute angle sensor (62) is disposed in the stationary inner portion (9) of the body in order to sense the angle orientation of each fin (7a, 7b, 7c).
